# EUROPEAN PATENT SPECIFICATION

(11) **EP 1 669 287 B1**
(45) Date of publication and mention of the grant of the patent: **12.12.2012**
(21) Application number: 03748692.5
(22) Date of filing: 02.10.2003
(51) Int. Cl.: H02K 7/00, B63J 3/02

(54) **POWER GENERATION SYSTEM OF SHIP**
ENERGIEERZEUGUNGSSYSTEM FÜR SCHIFF
SYSTEME DE GENERATION DE PUISSANCE DE NAVIRE

(43) Date of publication of application: 14.06.2006
(60) Divisional application: 07020909.3
(73) Proprietor: Yanmar Co., Ltd., Osaka-shi, Osaka 530-0013 (JP)
(72) Inventor: Mori, Hisanori, Kanzaki Kokyukoki MFG. Co., Ltd., Amagasaki-shi, Hyogo 661-0981 (JP); Imanaka, Toshio, Kanzaki Kokyukoki MFG. Co., Ltd., Amagasaki-shi, Hyogo 661-0981 (JP)
(74) Representative: Jostarndt, Hans-Dieter
(86) International application number: PCT/JP2003/012685
(87) International publication number: WO 2005/032935

(56) References cited:
- DE-A1- 10 017 396
- DE-A1- 19 623 914
- GB-A- 2 357 484
- JP-A- 07 184 351
- JP-A- 08 223 884
- JP-A- 08 251 859
- JP-A- 55 065 419
- JP-A- 2000 341 959
- JP-A- 2002 021 759
- JP-A- 2002 165 401
- JP-A- 2003 080 955
- JP-A- 2003 081 189
- JP-A- 2003 081 190
- JP-A- 2003 244 816
- JP-U- 50 062 601
- JP-U- 61 017 850
- US-A- 3 962 933
- US-A- 4 010 377

## Description

### Technical Field of the Invention

The present invention relates to an electric power generating system for supplying electric power to inboard equipments of a vessel.

### Background Art

A conventional vessel-propelling machine comprises an internal combustion engine and a transmission, so that a propeller connected to the transmission is driven by the driving force of the internal combustion engine decelerated through the transmission.

As disclosed in Japanese Laid-open Gazette No. 2003-81189, an example of the propelling machine supplies output power from the internal combustion engine for propelling a vessel to a generator as well as the transmission, so as to drive the propeller connected to the transmission and to make the generator stably generate electric power.

Referring to a conventional system for cooling the generator, a flywheel is provided with a cooling fan, and a flywheel housing and a mounting flange are formed with respective vent holes for cooling the generator. Since a casing of the generator is unopen, the generator and the casing thereof, whose temperature become highest in the machine, are insufficiently cooled, i.e., the cooling efficiency is insufficient. Further, the generator is liable to corrode or to shorten its life because water caused by dew condensation is collected inside the casing. If the cooling system uses water for cooling, the system is entirely complicated because it requires piping and a pump. Such a complicated system is difficult to have maintenance and is expensive.

As disclosed in Japanese Laid-open Gazette No. 2003-81189, in a conventional well-known system, a generator for generating electric power for inboard equipments of a vessel is interposed between an internal combustion engine and a decelerating transmission so as to stably supply the inboard equipments through an inverter.

The document US 40 10 377 is considered to be the closest prior art and discloses a combined propulsion and power generation system for watercraft.

Conventionally, a single inverter is provided to the conventional generator so as to convert electric power generated by the power generator into an alternating current to be supplied to the inboard equipments. Therefore, the inverter must be an expensive high-power unit. Further, if the generator interposed between the internal combustion engine and the transmission is enclosed in a casing, it requires means for taking the output power of the generator outward from the casing. Further, the generator is assembled into a vessel-propelling machine at need, and removed from the vessel-propelling machine if it is unnecessary. Therefore, an output portion of the internal combustion engine and an input portion of the transmission have to be changed in dimension for attachment thereof depending on whether or not the generator is attached, thereby increasing the number of required components and costs.

Moreover, the conventional vessel-propelling machine, in which the internal combustion engine, the generator and the transmission are integrally assembled, is mounted onto a vessel by supporting the integral combustion engine onto the vessel through a vibro-isolating member. However, in the conventional vessel-propelling machine, the position for attachment of the vibro-isolating member is limited, so that the vessel-propelling machine cannot be easily installed to various kinds of vessels.

To solving the above-mentioned problems, an object of the present invention is to provide a vessel-propelling machine, in which an internal combustion engine for propelling a vessel also serves as an engine for generating electric power, provided with a casing including a water-draining system for preventing an electric power generator therein from corrosion and life degradation, thereby ensuring a simple and inexpensive electric power generating and cooling system in the vessel-propelling machine. Another object of the present invention is to provide a vessel-propelling machine which can be easily installed to various kinds of vessels, and which can be equipped with an inexpensive electric power generator ensuring sufficient total output power by easy assembling work and wiring.

### Disclosure of the Invention

An electric power generating system of a vessel according to the present invention as defined by the features of claims 1, comprises an electric power generator disposed on a drive train from a crankshaft of an internal combustion engine to a transmission for propelling the vessel. A casing which houses the generator is provided on its outer peripheral surface with a plurality of fins or ribs. Preferably, the fins or the ribs are arranged in parallel to the crankshaft. Holes open into the casing are provided under the fins or ribs and substantially parallel to the fins or ribs. Therefore, heat can be radiated from the generator casing nearest to the generator so as to enhance the cooling efficiency. Further, the generator casing is strengthened by the fins or ribs provided thereon. Further, since the holes are disposed under the fins or ribs, the fins or ribs prevent vertically dropping water from entering the generator casing through the holes. Furthermore, since the holes are disposed substantially parallel to the fins or ribs, the holes become substantially parallel to the crankshaft, thereby ensuring smooth circulation of the cooling air, i.e., enhancing the air-cooling efficiency.

The casing is made by casting, so that an inner peripheral surface of the casing is sloped for drafting a core. A drain hole is formed on a lower side of the sloped surface. Alternatively, a drain hole is formed at a lower portion of another casing connected to the lower side of the sloped surface of the generator casing. Therefore, water accumulated inside the generator casing produced by dew condensation or another reason can be drained so as to prevent the generator from corrosion and life degradation.

A plurality of tandem electric power generators can be disposed between the internal combustion engine and the transmission for propelling the vessel. An attachment part of the casing on the side toward the internal combustion engine is sized as large as an attachment part of the power input side of the transmission, and an attachment part of the casing on the side toward the transmission is sized as large as an attachment part of the power output side of the internal combustion engine. In this way, the tandem generators can be disposed so as to ensure required large electric output power. The attachment part of the power output part of the internal combustion engine and the attachment part of the power input part of the transmission do not be changed depending on whether or not each of the attachment parts is attached to the generator, thereby reducing the number of parts, and facilitating attachment and detachment of the generators.

An electric power generating system of a vessel according to the present invention comprises a flywheel and a generator. The flywheel is disposed on a crankshaft of an internal combustion engine and connected to an input shaft of a transmission for propelling the vessel. The generator is disposed on a drive train from the flywheel to the transmission for propelling the vessel. A permanent magnet used as a rotor of the generator is attached onto a rotary member removably connected to the flywheel and the transmission. A stator coil of the generator is fixed to a casing, and a reentrant is partially provided between the casing and an outer peripheral surface of the stator coil so as to pass air therethrough between spaces in the casing in front and rear of the stator coil. Preferably, the rotary member, which rotates the rotor, is a hollow shaft connected to the transmission through a directly or indirectly combined elastic joint. The rotary member may be a hollow shaft provided on its end surface with an attachment part to be fitted to a cooling fan. The rotary member may be a hollow shaft provided on its outer peripheral surface with vanes. Preferably, the reentrant is connected with a hole opened on an outside surface of the casing. A fin or a rib may be provided above the hole. The rotary member with the rotor fixed thereto connects the flywheel to the transmission, thereby reducing a parts count and costs. The efficiency of cooling the generator can be enhanced by the reentrants provided between the casing and the stator, the holes connected with the reentrants, the fins or ribs provided above the holes, and the fan attached to the rotary member.

A power generating system of a vessel according to the present invention comprises an electric power generator disposed on a drive train from a crankshaft of an internal combustion engine to a transmission for propelling the vessel, wherein a rectifying and smoothing device converts output power of the generator into direct current, and a plurality of inverters convert the direct current into alternating current so as to supply it to inboard equipments. Preferably, if a set of output cables for respective phases of the generator is supposed as a unit of output cable, the output power of the generator is taken out by the unit of output cable and converted into direct current by the rectifying and smoothing device, and the direct current is branched and connected to the inverters in parallel. Alternatively, an output part of the generator may be connected with units of output cables connected to respective rectifying and smoothing devices, so that the rectifying and smooth devices convert the output power of the generator into respective direct currents, and the inverters convert the respective direct currents into respective alternating currents. Therefore, electric power can be supplied in a wide range of rotational speed of the engine, and small inverters can be used so as to save costs while keeping the required total capacity of electric power.

A power generating system of a vessel according to the present invention comprises an electric power generator disposed on a drive train from a crankshaft of an internal combustion engine to a transmission for propelling the vessel. A casing housing the generator is provided with a hole for wiring through which an output cable of the generator can be taken out from the casing. Preferably, a connector or a terminal stand is attached into the hole for wiring, wherein one side of the connector or the terminal is connected with the output cable of the generator, and the other side thereof is connected with an outer cable. Such an arrangement for easily taking out the output cable facilitates for easy attachment work of the output cable for its maintenance or the like. An outer cable can be easily attached or removed to and from the connector or the terminal, thereby easing wiring work.

Furthermore, according to the present invention, a mounting leg for mounting a propelling machine onto a body of the vessel is attached onto an outer peripheral surface of the casing, or onto an attachment portion formed on the outer peripheral surface of the casing. Therefore, besides mounting legs used when the generator is not mounted, the mounting legs can be attached to the outer periphery of the casing, so that a suitable mounting method can be selected corresponding to conditions of the target vessel so as to suit the casing with various kinds of vessels easily.

### Brief Description of the Drawings

Fig. 1 is a sectional side view of a propelling machine according to a first embodiment.
Fig. 2 is a sectional side view of the casing of the electric power generator having a drain hole in the propelling machine of the first embodiment.
Fig. 3 is a sectional side view of another electric power generator in the propelling machine of the first embodiment.
Fig. 4 is a partial macrograph of the casing of the electric power generator, having the drain hole, in the propelling machine of the first embodiment.
Fig. 5 is a side view of the casing.
Fig. 6 is a partial macrograph of the casing of the electric power generator, having a reshaped drain hole, in the propelling machine of the first embodiment.
Fig. 7 is a side view of the casing.
Fig. 8 is a side view of a casing of an electric power generator, having drain holes, in the propelling machine of the second embodiment.
Fig. 9 is a side view of a casing of the electric power generator, having a drain hole, in the propelling machine of the third embodiment.
Fig. 10 is a side view of a casing of the electric power generator, having another drain hole, in the propelling machine of the third embodiment.
Fig. 11 is a schematic side view of a stem-drive propelling machine.
Fig. 12 is a sectional side view of a stem-drive propelling machine according to a first embodiment.
Fig. 13 is a sectional side view of a stem-drive propelling machine according to a second embodiment.
Fig. 14 is a sectional side view of a stem-drive propelling machine according to a third embodiment.
Fig. 15 is a sectional side view of a stem-drive propelling machine according to a fourth embodiment.

### Best Mode for Carrying out the Invention

Explanation will be given of a vessel-propelling machine.

A sail-drive propelling machine 201 according to a first embodiment will now be described.

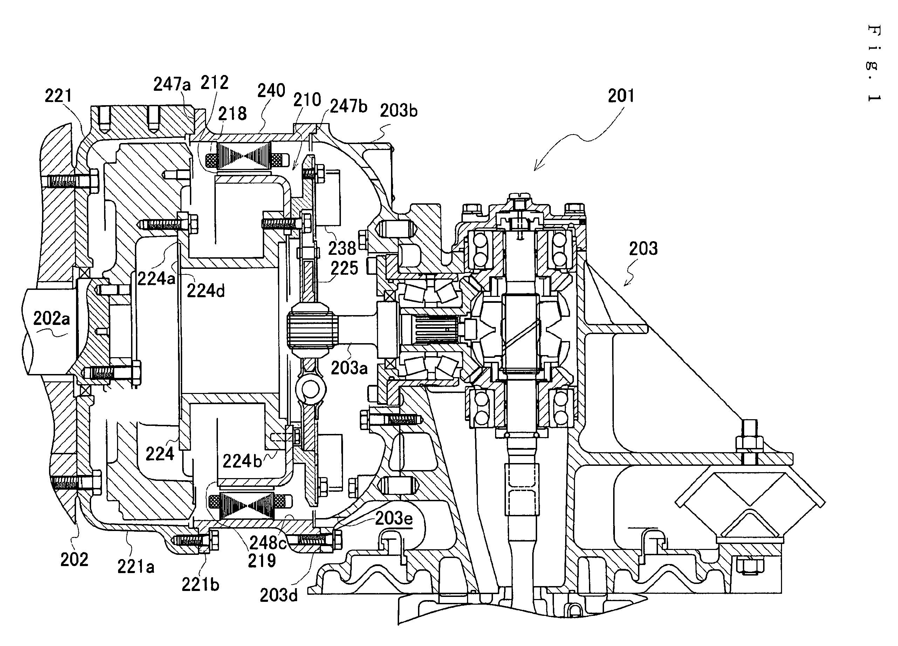

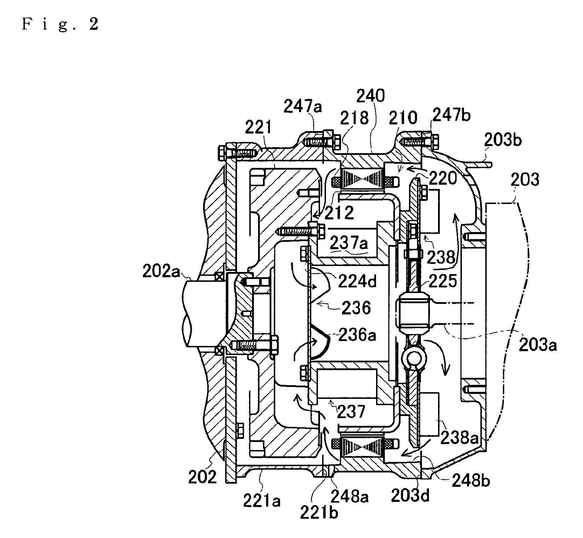

As shown in Figs. 1 and 2, a flywheel 221 is disposed on one end of a crankshaft 202a of the internal combustion engine 202 so as to be rotated by the crankshaft 202a serving as an output shaft of the engine 202. The flywheel 221 is covered with a flywheel housing (hereinafter referred to as "FW housing") 221 a.

A generator casing 240 is attached to the rear portion of the FW housing 221a. Components of the generator 210 are built in the generator casing 240. Specifically, stator coils 218 are attached onto the inner peripheral surface of the generator casing 240 and a magnet 212 is arranged radially inward of the stator coils 218 (toward the center). The magnet 212 is fixed to a distance piece 224, which is a rotary member, through a cylindrical attachment member 219. The magnet 212, the attachment member 219, and a flange part 224b of the distance piece 224 function as a rotor. The distance piece 224 is fixed to the flywheel 221 so that the magnet 212 can be rotated integrally with the distance piece 224 and the flywheel 221.

The stator coils 218 are fixed on the inner peripheral surface of the generator casing 240 by bolts 207 so as to be arranged circlewise inside the generator casing 240.

The magnet 212 is attached to the distance piece 224 through the attachment member 219 so as to be arranged radially inward of the stator coils 218.

The distance piece 224 is formed as a cylindrical hollow shaft, and flange parts 224a and 224b are integrally formed at the front and rear ends of the distance piece 224, respectively.

The front flange part 224a disposed at the front end of the distance piece 224 is attached to the flywheel 221 so that the distance piece 224 can be rotated integrally with the flywheel 221.

The attachment member 219 is fixed to the rear flange part 224b disposed on a side opposite to the flywheel 221. The magnet 212 is fixed to the distance piece 224 through the attachment member 219. The cylindrical attachment member 219 is provided with the magnet 212 on its outer peripheral surface.

A mounting flange 203b of the transmission 203 can be attached to the generator casing 240 on the side opposite to the FW housing 221a. The mounting flange 203b, serving as a part of the casing of the generator, is attached to the generator casing 240 so as to fix the transmission 203 to the engine 202.

The crankshaft 202a of the engine 202 al so serves as a rotary shaft of the generator 210, and the crankshaft 202a is arranged coaxially to an input shaft 203a of the transmission 203. Consequently, the rotary shaft of the generator 210 is disposed coaxially with the crankshaft 202a and the input shaft 203a. When the mounting flange 203b is attached to the generator casing 240, the input shaft 203a comes to be connected to the flywheel 221 through an elastic joint 225 so as to be rotated by the crankshaft 202a. The transmission 203 decelerates and transmits the driving force from the input shaft 203a to the propeller 204, thereby rotating the propeller 204.

Cooling fans are provided to the generator 210.

As shown in Fig. 2, fans 236, 237 and 238 are arranged at the front end, the outer peripheral surface and the back of the distance piece 224, respectively. The fans, which are provided at three positions in the present embodiment, may be alternatively provided at one or two optionally selected positions.

The first fan 236 is attached to the front end of the distance piece 224 (toward the flywheel).

The front flange part 224a of the distance piece 224 is formed with an attachment part 224d onto which the fan 236 is attached. The attachment part 224d is an annular groove formed at the front end of the distance piece 224, into which the fan 236 can be fitted. Vanes 236a of the fan 236 are arranged inside the distance piece 224. The fan 236 is rotated integrally with the distance piece 224 so as to enhance the efficiency of cooling the generator 210.

The second fan 237 is provided on the outer peripheral surface of the distance piece 224.

Vanes 237a are projected outward from the outer peripheral surface of the distance piece 224, thereby constituting the fan 237. The front end of the fan 237 is fixed to the rear surface of the front flange part 224a, and the rear end of the fan 237 is fixed to the front surface of the rear flange part 224b. Alternatively, the fan 237 may be formed integrally with the front flange part 224a and the rear flange part 224b.

The third fan 238 is arranged behind the distance piece 224.

The third fan 238 is fastened through a fixture member 220 to the distance piece 224 together with the attachment member 219 having the fixed magnet 212. The third fan 238 is arranged on the rear surface of the fixture member 220 and fixed to the distance piece 224 by bolts. Vanes 238a of the fan 238 are arranged behind the generator 210. Therefore, the fixture member 220 and the third fan 238 are rotated integrally with the distance piece 224 so as to enhance the efficiency of cooling the generator 210.

Accordingly, the cooling fans are disposed within the generator casing 240 so that air flows inside the generator casing 240 as arrows drawn in Fig. 2 so as to ensure high cooling efficiency.

An alternative power generator according to another embodiment will be described.

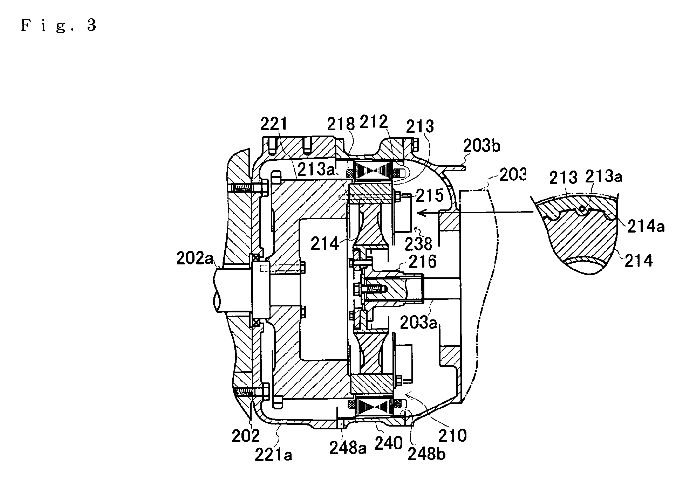

The alternative electric power generator 210 is provided with a rotary member using an elastic member and a flange. As shown in Fig. 3, the generator casing 240 is attached to the rear part of the FW housing 221a, and component members of the generator 210 are built in the generator casing 240.

The stator coils 218 are attached to the inner peripheral surface of the generator casing 240, and the magnet 212 is disposed radially inward of the stator coils 218 (toward the center). The magnet 212 is fixed onto an outer ring 213 fixed to the flywheel 221. An elastic member 214 is fixed to a flange 216. The outer ring 213, the elastic member 214 and the flange 216 are integrally rotatable. The elastic member 214 is ring-shaped in sectional rear view and has reentrants 214a along its outer periphery.

The elastic member 214 is integrally formed with an I-like shaped part in sectional side view fixed onto the flange 216. The flange 216 is connected to the input shaft 203a of the transmission 203.

The outer ring 213 is formed with boltholes 213a disposed in the fore-and-aft direction. Bolts 215 are passed through the respective boltholes 213a and screwed into the flywheel 221 so as to fix the flywheel 221 to the outer ring 213. Therefore, the flywheel 221 rotates the magnet 212 through the outer ring 213, the elastic body 214 and the flange 216, and is connected to the input shaft 203a so as to drive the input shaft 203a by the crankshaft 202a. The transmission 203 decelerates and transmits the driving force from the input shaft 203a to the propeller 204, thereby driving the propeller 204.

The third fan 238 disposed behind the outer ring 213 is fixed to the outer ring 213 by the bolts 215 fixing the outer ring 213 to the flywheel 221.

Due to the fan 238 for cooling the generator 210, the efficiency of cooling the interior of the generator casing 240 is improved. Furthermore, the bolts 215 fixing the outer ring 213 to the flywheel 221 are also used for fixing the fan 238 to the outer ring 213, thereby reducing the number of bolts.

The remains are constructed substantially similar to those of the above-mentioned generator.

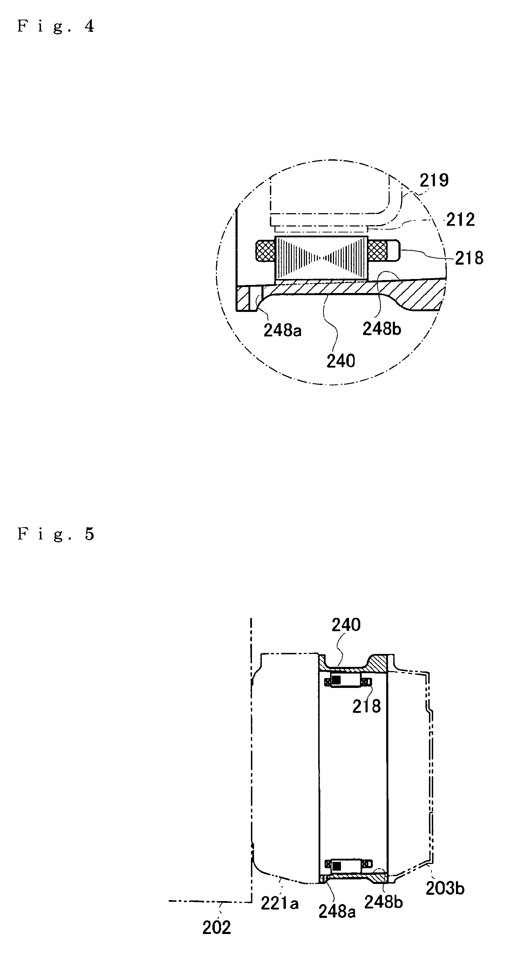

As shown in Figs. 2, 4 and 5, the generator casing 240 is made by casting, and its inside is sloped for drafting a core. The drain hole 248a is provided at the lower side of this slope 248b in the bottom portion of the generator casing 240.

With regard to the present embodiment, the slope 248b is so made that the front side of generator casing 240 (toward the engine) is open wider than the rear side thereof (toward the transmission). Therefore, the drain hole 248a is formed vertically through the front lower portion of the generator casing 240.

The drain hole 248a formed through the lower portion of generator casing 240 can drain water caused by dew condensation or another reason from the inside of the generator casing 240. The slope 248b remaining after drafting a core is used for letting water flow more efficiently.

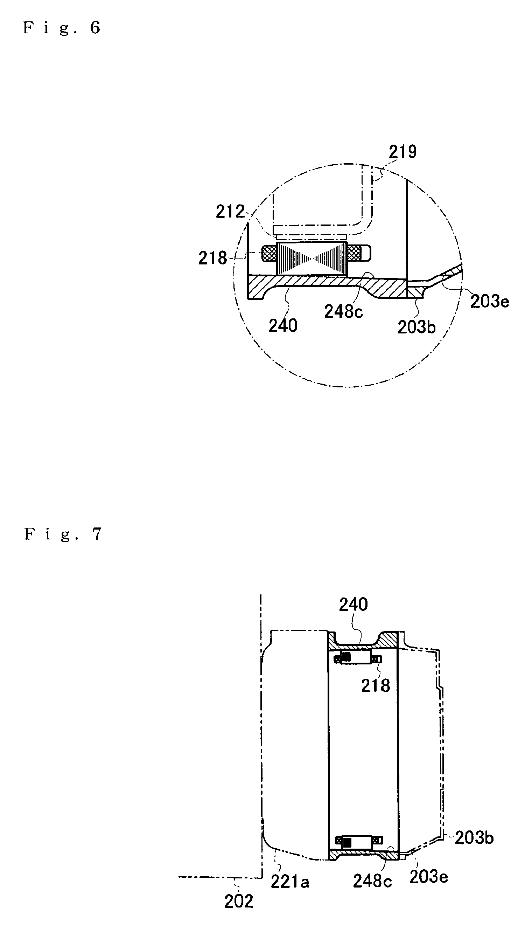

Alternatively, a hole 203e (shown in Figs. 1, 6 and 7) may be formed within the mounting flange 203b so as to drain water caused by dew condensation or the like in the generator casing 240.

The generator casing 240 shown in Figs. 1, 6 and 7 has a slope 248c such as to make the rear side of generator casing 240 (toward the transmission) open wider than the front side thereof (toward the engine). Namely, the slope 248c in the bottom portion of generator casing 204 is lowered toward the mounting flange 203b.

The drain hole 203e is formed within the bottom portion of mounting flange 203b arranged on the lower side of the bottom portion of generator casing 240. The drain hole 203e is formed along the slope 248c of the generator casing 240 in the fore-and-aft direction of the mounting flange 203b.

The undersurface of the drain hole 203e is positioned lower than the slope 248c of the generator casing 240.

Due to this construction, water collected inside the generator casing 240 by dew condensation or another reason can be drained. The slope 248b or 248c formed for drafting a casting core can be effectively utilized for draining water.

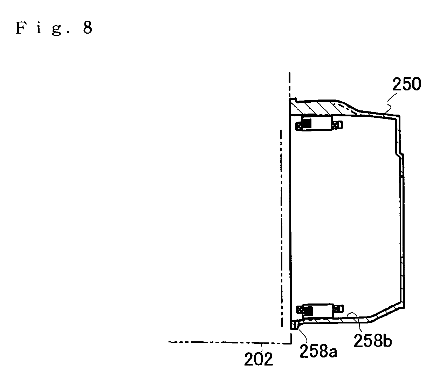

As shown in Fig. 8, the generator casing 250 has a slope 258b and a bottom drain hole 258a, which are similar to those of the generator casing 240 of the first embodiment, and have the same effect as those of the generator casing 240.

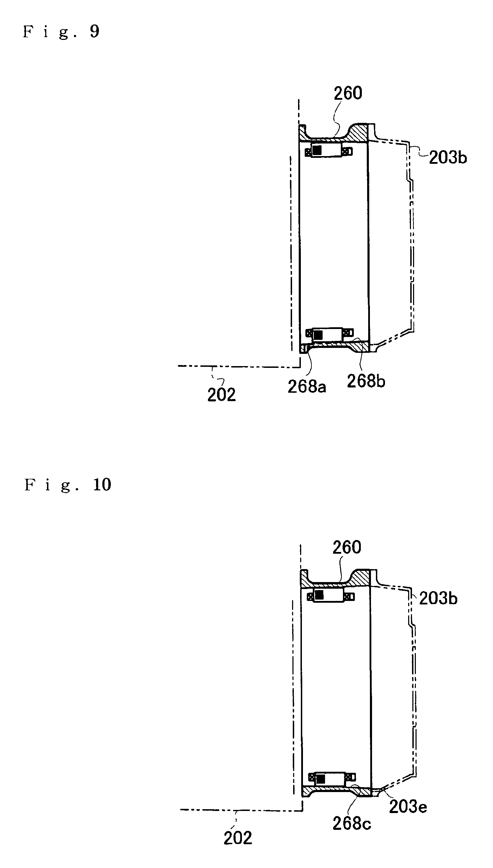

As shown in Figs. 9 and 10, the generator casings 260 have respective slopes 268b and 268c and bottom drain holes 268a or 203e, which are substantially similar to those of the generator casing 240 of the first embodiment, and have the same effect as those of the generator casing 240.

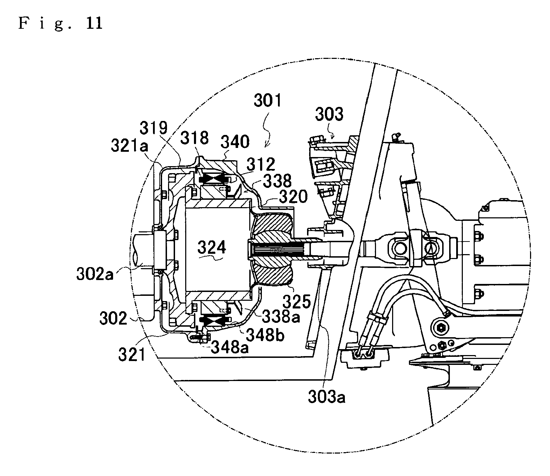

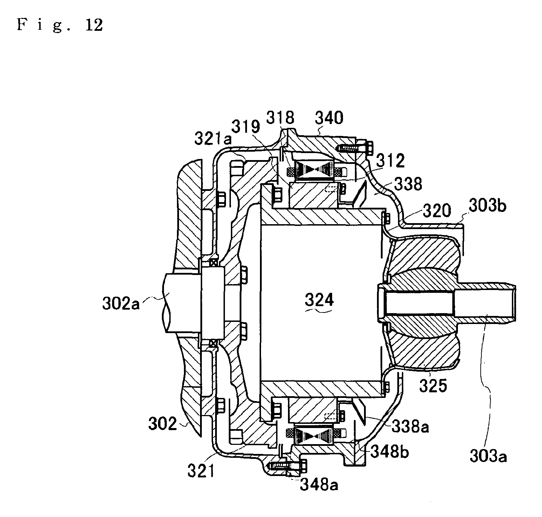

As shown in Figs. 11 and 12, an internal combustion engine 302 has a crankshaft 302a, serving as its output shaft, and a flywheel 321 drivingly fitted on one end of the crankshaft 302a of the internal combustion engine 302. The flywheel 321 is covered with a flywheel housing (hereinafter referred to as "FW housing") 321a.

A generator casing 340 is attached to a rear portion of the FW housing 321a. Components of an electric power generator 310 are built in the generator casing 340. Specifically, stator coils 318 are attached onto the inner peripheral surface of the generator casing 340, and a magnet 312 is arranged radially inward of the stator coils 318 (toward the center). The magnet 312 is fixed to a distance piece 324, which is a rotary member, through a cylindrical attachment member 319. The distance piece 324 is fixed to the flywheel 321, so that the magnet 312 can be rotated integrally with the distance piece 324 and the flywheel 321.

The distant piece 324 is a cylindrical hollow shaft integrally having a flange part 324a on its front end.

The front flange part 324a disposed on the front end of the distance piece 324 is attached to the flywheel 321 so as to be rotated integrally with the flywheel 321.

The distant piece 324 is connected to the input shaft 303a through an elastic joint 325. The elastic joint 325 is positioned behind the distant piece 324 and fixed to the rear surface of the distant piece 324 by an attachment member 320. The stem-drive input shaft 303a is arranged at the center portion of the elastic joint 325. The stern-drive input shaft 303a can be rotated integrally with the elastic joint 325, the attachment member 320 and the distant piece 324.

As shown in Fig. 12, a mounting flange 303b of the transmission 303 can be connected to the generator casing 340 on a side opposite to the FW housing 321a. By connecting the mounting flange 303b to the generator casing 340, the transmission 303 is attached and fixed to the internal combustion engine 302.

A rotary shaft of the generator 310 is the crankshaft 302a of the internal combustion engine 302, and the crankshaft 302a is arranged coaxially to the (stem drive) input shaft 303a of the transmission. Accordingly, the rotary shaft of the generator 310 is disposed coaxially to the crankshaft 302a and the power take-off shaft 303a.

The power take-off shaft 303a is connected to the distant piece 324 through the elastic joint 325 so as to be rotated by the crankshaft 302a.

A cooling fan is equipped onto the generator 310.

As shown in Fig. 12, a fan 338 is arranged on the outer peripheral surface of the distance piece 324.

The fan 338 is fastened to the attachment member 319 having the magnet 312 fixed thereon by bolts, so as to be fixed to the distant piece 324 together with the attachment member 319. Vanes 238a of the fan 238 are arranged on the rear outer peripheral surface of the distance piece 324. The fan 338 is rotated by rotating the distance piece 324. By providing the cooling fan 338 on the generator 310 as the above, air flows inside the generator casing 340, thereby enhancing the cooling efficiency of the generator 310.

A drain hole 348a is provided at the lower portion of the generator casing 340.

As shown in Figs. 11 and 12, the generator casing 340 is made by casting and the inside of the generator casing is sloped for drafting a casting core. The drain hole 348a is provided at the lower side of a slope 348b in the bottom portion of the generator casing 340.

In the present embodiment, the slope 348b is so constructed that the front side of generator casing 340 (toward the engine) is open wider than the rear side of generator casing 340 (toward the transmission). The drain hole 348a is formed at the front lower portion of the generator casing 340.

The drain hole 348a formed at the lower portion of the generator casing 340 can drain water collected by dew condensation or another reason from the generator casing 340. The slope 348b formed for drafting a core can be effectively used for flowing water.

The other parts of the generator casing 340 are constructed substantially similar to those of the generator casing 240 of the sail-drive propelling machine 201 of the first embodiment.

Next, a stern-drive propelling machine 301 according to the second embodiment will be described.

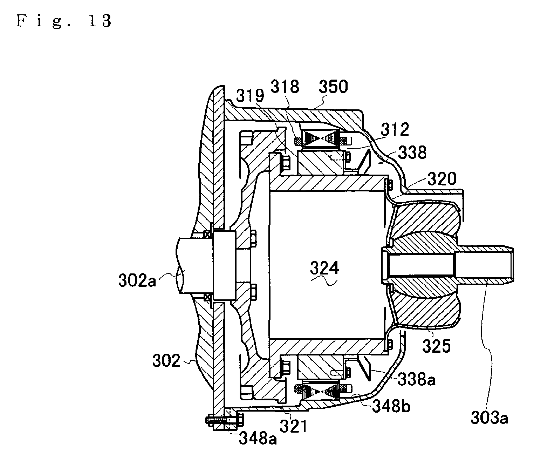

In the propelling machine 301 of the second embodiment as shown in Fig. 13, a generator casing 350 is equal to the generator casing 340 of the first embodiment integrated with the FW housing 331a and the mounting flange 303b.

The other configuration of the propelling machine 301 of the present embodiment, such as form of the cooling fan 338, are constructed substantially similar to the stem-drive propelling machine 301 of the first embodiment.

Next, a stern-drive propelling machine 301 according to the third embodiment will be described.

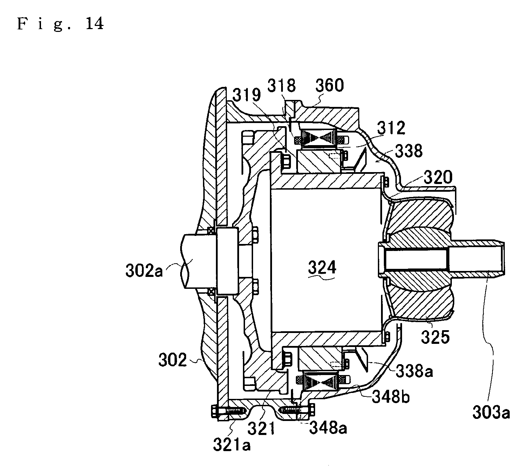

In the propelling machine 301 of the third embodiment as shown in Fig. 14, a generator casing 360 is equal to the generator casing 340 of the first embodiment integrated with the FW housing 331 a.

The other configuration of the propelling machine 301 of the present embodiment, such as form of the cooling fan 338, is constructed substantially similar to the stern-drive propelling machine 301 of the first embodiment.

The generator casing 360 used in the sail-drive propelling machine of the third embodiment is constructed substantially similar to the generator casing 260 of the said-drive propelling machine 201 of the third embodiment.

Next, a stem-drive propelling machine 301 according to the fourth embodiment will be described.

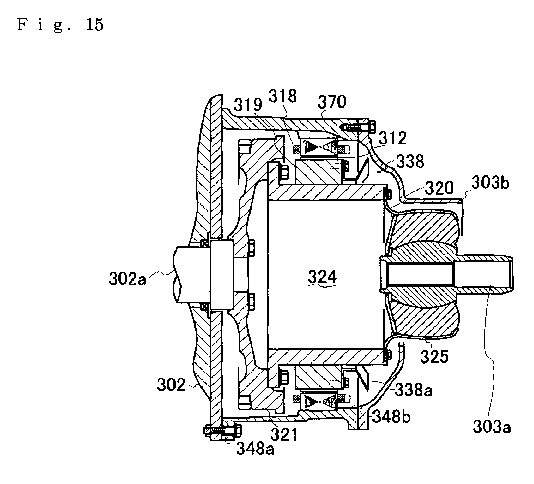

In the propelling machine 301 of the fourth embodiment as shown in Fig. 15, a generator casing 370 is equal to the generator casing 340 of the first embodiment integrated with the mounting flange 303b.

The other configuration of the propelling machine 301 of the present embodiment, such as form of the cooling fan 338, is constructed substantially similar to the stern-drive propelling machine 301 of the first embodiment. An alternative electric power generator shown in Fig. 58 used in this embodiment is constructed substantially similar to the corresponding generator used in the stem-drive propelling machine of the first embodiment.

The generator casing 370 used in the propelling machine of the fourth embodiment is constructed substantially similar to the generator casing 270 of the sail-drive propelling machine 201 of the fourth embodiment.

### Industrial Applicability of the Invention

A generator of the present invention is disposed between an internal combustion engine and a transmission of the propelling machine. In each of the present embodiments, the generator is disposed between a flywheel and the transmission. Alternatively, the generator may be disposed between the flywheel and the internal combustion engine.

## Claims

1. A power generating system of a vessel comprising:
an electric power generator (210,310) disposed on a drive train from a crankshaft (202a,302a) of an internal combustion engine (202,302) to a transmission (203,303) for propelling the vessel in an axial direction of the crankshaft (202a,302a); and
a cylindrical casing (240,250,260,340,350,360) housing the electric power generator (210,310), wherein the casing (240,250,260,340,350,360) has an opened front side disposed toward the internal combustion engine (202,302) and has an opened rear side disposed toward the transmission (203,303) so that the front and rear sides of the casing (204,250,260,340,350,360) are opposite to each other in the axial direction of the crankshaft (202a,302a),
**characterized in that** the casing (240,250,260,340,350,360) of the electric power generator (210,310) is made by casting, whereby an inside surface of the casing (240,250,260,340,350,360) is tapered by drafting a casting core so that one of the front and rear sides of the casing (240,250,260,340,350,360) is opened wider than the other of the front and rear sides of the casing (240,250,260,340,350,360), whereby a bottom portion of the casing (240,250,260,340,350,360) has a slope (248b,258b,268b,348b,248c,268c) which is lowered toward the wider opened front or rear side of the casing (240,250,260,340,350,360), and whereby a drain hole (248a,258a,268a,348a,203e) is provided at or adjacent to a lower side of the slope (248b,258b,268b,348b,248c,268c).

2. The power generating system of a vessel according to claim 1, further comprising:
a flywheel (221,321) disposed on the crankshaft (202a,302a); and
a flywheel housing (221a,321a) incorporating the flywheel (221,321), wherein the front side of the casing (240,250,260,340,350,360) of the electric power generator (210,310) is connected to the flywheel housing (221a,321a), and is opened wider than the rear side of the casing (240,250,260,340,350,360) so that the slope (248b,258b,268b,348b) of the casing (240,250,260,340,350,360) is lowered toward the front side of the casing (240,250,260,340,350,360), and wherein the drain hole (248a,258a,268a,348a) is formed in a front lower portion of the casing (240,250,260,340,350,360) at the lower side of the slope (248b,258b,268b,348b).

3. The power generating system of a vessel according to claim 1, further comprising:
an input shaft (203a) of the transmission (203) connected to the crankshaft (202a) through the electric power generator (210); and
a mounting flange (203b) of the transmission (203), surrounding the input shaft (203a) and serving as a part of a casing of the electric power generator (210), wherein the rear side of the casing (240,260) of the electric power generator (210) is connected to the mounting flange (203b), and is opened wider than the front side of the casing (240,260) so that the slope (248c,268c) is lowered toward the rear side of the casing (240,260), and wherein the drain hole (203e) is formed in a bottom portion of the mounting flange (203e) along the slope (248c,268c) of the casing (240,260).

## Patentansprüche

1. Energieerzeugungssystem für ein Schiff, wobei das System umfasst:
einen Elektroenergiegenerator (210, 310), der an einem Antriebsstrang von einer Kurbelwelle (202a, 302a) einer Verbrennungsmaschine (202, 302) zu einem Getriebe (203, 303) zum Antreiben des Schiffes in einer axialen Richtung der Kurbelwelle (202a, 302a) angeordnet ist; und
ein zylindrisches Gehäuse (240, 250, 260, 340, 350, 360), in dem der Elektroenergiegenerator (210, 310) aufgenommen ist, wobei das Gehäuse (240, 250, 260, 340, 350, 360) eine geöffnete Vorderseite aufweist, die in Richtung der Verbrennungsmaschine (202, 302) angeordnet ist, und eine geöffnete Rückseite aufweist, die in Richtung des Getriebes (203, 303) angeordnet ist, sodass die Vorderseite und die Rückseite des Gehäuses (240, 250, 260, 340, 350, 360) einander in der axialen Richtung der Kurbelwelle (202a, 302a) gegenüberliegen,
**dadurch gekennzeichnet, dass** das Gehäuse (240, 250, 260, 340, 350, 360) des Elektroenergiegenerators (210, 310) durch Gießen hergestellt worden ist, wobei eine Innenoberfläche des Gehäuses (240, 250, 260, 340, 350, 360) dadurch, dass ein Gusskern in der Weise gezogen worden ist, dass die Vorderseite oder die Rückseite des Gehäuses (240, 250, 260, 340, 350, 360) weiter als die andere der Vorderseite und der Rückseite des Gehäuses (240, 250, 260, 340, 350, 360) geöffnet ist, konisch verjüngt ist, wobei ein unterer Abschnitt des Gehäuses (240, 250, 260, 340, 350, 360) eine Neigung (248b, 258b, 268b, 348b, 248c, 268c) aufweist, die in Richtung der weiter geöffneten Vorderseite oder Rückseite des Gehäuses (240, 250, 260, 340, 350, 360) abgesenkt ist, und wobei bei oder benachbart zu einer Unterseite der Neigung (248b, 258b, 268b, 348b, 248c, 268c) eine Ablassöffnung (248a, 258a, 268a, 348a, 203e) vorgesehen ist.

2. Energieerzeugungssystem eines Schiffs nach Anspruch 1, das ferner umfasst:
ein Schwungrad (221, 321), das an der Kurbelwelle (202a, 302a) angeordnet ist; und
ein Schwungradgehäuse (221a, 321a), das das Schwungrad (221, 321) enthält, wobei die Vorderseite des Gehäuses (240, 250, 260, 340, 350, 360) des Elektroenergiegenerators (210, 3 10) mit d e m Schwungradgehäuse (221a, 321a) verbunden ist und weiter als die Rückseite des Gehäuses (240, 250, 260, 340, 350, 360) geöffnet ist, sodass die Neigung (248b, 258b, 268b, 348b) des Gehäuses (240, 250, 260, 340, 350, 360) in Richtung der Vorderseite des Gehäuses (240, 250, 260, 340, 350, 360) abgesenkt ist, und wobei die Ablassöffnung (248a, 258a, 268a, 348a) in einem vorderen unteren Abschnitt des Gehäuses (240, 250, 260, 340, 350, 360) an der Unterseite der Neigung (248b, 258b, 268b, 348b) ausgebildet ist.

3. Energieerzeugungssystem eines Schiffs nach Anspruch 1, wobei das System ferner umfasst:
eine Eingangswelle (203a) des Getriebes (203), die über den Elektroenergiegenerator (210) mit der Kurbelwelle (202a) verbunden ist; und
einen Befestigungsflansch (203b) des Getriebes (203), der die Eingangswelle (203a) umgibt und als Teil eines Gehäuses des Elektroenergiegenerators (210) dient, wobei die Rückseite des Gehäuses (240, 260) des Elektroenergiegenerators (210) mit dem Befestigungsflansch (203b) verbunden ist und weiter als die Vorderseite des Gehäuses (240, 260) geöffnet ist, sodass die Neigung (248c, 268c) in Richtung der Rückseite des Gehäuses (240, 260) abgesenkt ist, und wobei die Ablassöffnung (203e) in einem unteren Abschnitt des Befestigungsflanschs (203e) entlang der Neigung (248c, 268c) des Gehäuses (240, 260) ausgebildet ist.

## Revendications

1. Système de génération de puissance d'un vaisseau comprenant :
un générateur de puissance électrique (210, 310) disposé sur un organe de transmission d'un vilebrequin (202a, 302a) d'un moteur à combustion interne (202, 302) à une transmission (203, 303) pour propulser le vaisseau dans une direction axiale du vilebrequin (202a, 302a) ; et
un carter cylindrique (240, 250, 260, 340, 350, 360) recevant le générateur de puissance électrique (210, 310), dans lequel le carter (240, 250, 260, 340, 350, 360) a un côté avant ouvert disposé vers le moteur à combustion interne (202, 302) et a un côté arrière ouvert disposé vers la transmission (203, 303) de sorte que les côtés avant et arrière du carter (240, 250, 260, 340, 350, 360) sont opposés l'un à l'autre dans la direction axiale du vilebrequin (202a, 302a),
**caractérisé en ce que** le carter (240, 250, 260, 340, 350, 360) du générateur de puissance électrique (210, 310) est fabriqué par moulage, une surface intérieure du carter (240, 250, 260, 340, 350, 360) s'amincissant en retirant un noyau de moule de sorte qu'un des côtés avant et arrière du carter (240, 250, 260, 340, 350, 360) est ouvert plus largement que l'autre des côtés avant et arrière du carter (240, 250, 260, 340, 350, 360), une portion inférieure du carter (240, 250, 260, 340, 350, 360) ayant une pente (248b, 258b, 268b, 348b, 248c, 268c) qui est abaissée vers le côté avant ou arrière du carter (240, 250, 260, 340, 350, 360) ouvert plus largement, et un orifice d'évacuation (248a, 258a, 268a, 348a, 203e) étant prévu au niveau de ou de manière adjacente à un côté inférieur de la pente (248b, 258b, 268b, 348b, 248c, 268c).

2. Système de génération de puissance d'un vaisseau selon la revendication 1, comprenant en outre :
un volant (221, 321) disposé sur le vilebrequin (202a, 302a) ; et
un logement de volant (221a, 321a) incorporant le volant (221, 321), dans lequel le côté avant du carter (240, 250, 260, 340, 350, 360) du générateur de puissance électrique (210, 310) est connecté au logement de volant (221a, 321a) et est ouvert plus largement que le côté arrière du carter (240, 250, 260, 340, 350, 360) de sorte que la pente (248b, 258b, 268b, 348b) du carter (240, 250, 260, 340, 350, 360) est abaissée vers le côté avant du carter (240, 250, 260, 340, 350, 360), et dans lequel l'orifice d'évacuation (248a, 258a, 268a, 348a) est formé dans une portion inférieure avant du carter (240, 250, 260, 340, 350, 360) au niveau du côté inférieur de la pente (248b, 258b, 268b, 348b).

3. Système de génération de puissance d'un vaisseau selon la revendication 1, comprenant en outre :
un arbre d'entrée (203a) de la transmission (203) connecté au vilebrequin (202a) par le générateur de puissance électrique (210) ; et
une bride de montage (203b) de la transmission (203) entourant l'arbre d'entrée (203a) et servant de partie d'un carter du générateur de puissance électrique (210), dans lequel le côté arrière du carter (240, 260) du générateur de puissance électrique (210) est connecté à la bride de montage (203b) et est ouvert plus largement que le côté avant du carter (240, 260) de sorte que la pente (248c, 268c) est abaissée vers le côté arrière du carter (240, 260), et dans lequel l'orifice d'évacuation (203e) est formé dans une portion inférieure de la bride de montage (203e) le long de la pente (248c, 268c) du carter (240, 260).
